# EUROPÄISCHE PATENTANMELDUNG

(11) **EP 1 681 218 A1**
(43) Veröffentlichungstag der Anmeldung: **19.07.2006**
(21) Anmeldenummer: 05027701.1
(22) Anmeldetag: 17.12.2005
(51) Int. Cl.: B60T 13/52, B60T 7/02

(54) **Unterdruck-Bremskraftverstärker**

(30) Priorität: 15.01.2005 DE 102005001980
(71) Anmelder: LuK Automobiltechnik GmbH & Co. KG, 42499 Hückeswagen (DE)
(72) Erfinder: Lange, Robert, 42477 Radevormwald (DE)
(74) Vertreter: Duschl, Edgar Johannes

(57) **Zusammenfassung**

Die Erfindung betrifft einen Unterdruck-Bremskraftverstärker (1) mit einem Bremskraftverstärkergehäuse, das durch einen Arbeitskolben (6) in eine Unterdruckkammer (12) und eine Arbeitskammer (11) unterteilt ist, wobei ein Unterdruckerzeuger (30), insbesondere ein Unterdruckpumpe, in das Bremskraftverstärkergehäuse (4) integriert ist oder am Bremskraftverstärkergehäuse angeordnet ist.

## Beschreibung

Die Erfindung betrifft einen Unterdruck-Bremskraftverstärker mit einem Bremskraftverstärkergehäuse, das durch einen Arbeitskolben in eine Unterdruckkammer und eine Arbeitskammer unterteilt ist.

Durch den Unterdruck-Bremskraftverstärker wird beim Bremsen eines Kraftfahrzeugs die Muskelkraft des Fahrers verstärkt. Bei herkömmlichen Unterdruck-Bremskraftverstärkern ist an dem Bremskraftverstärkergehäuse ein Anschluss für eine Unterdruckleitung vorgesehen. Der Unterdruck in der Unterdruckkammer kann durch eine vom Motor angetriebene Unterdruckpumpe bereitgestellt werden, die über die Unterdruckleitung mit dem Anschluss in Verbindung steht. Die Arbeitskammer wird wechselweise über ein Doppelventil (Unterdruck- und Außenluftventil) mit der Außenluft oder der Unterdruckkammer verbunden. Das Doppelventil wird über die Kolbenstange vom Bremspedal betätigt.

Aufgabe der Erfindung ist es, einen Unterdruck-Bremskraftverstärker mit einem Bremskraftverstärkergehäuse, das durch einen Arbeitskolben in eine Unterdruckkammer und eine Arbeitskammer unterteilt ist, zu schaffen, der einfach aufgebaut und kostengünstig herstellbar ist.

Die Aufgabe ist bei einem Unterdruck-Bremskraftverstärker mit einem Bremskraftverstärkergehäuse, das durch einen Arbeitskolben in eine Unterdruckkammer und eine Arbeitskammer unterteilt ist, dadurch gelöst, dass ein Unterdruckerzeuger, insbesondere eine Unterdruckpumpe, in das Bremskraftverstärkergehäuse integriert ist oder außen am Bremskraftverstärkergehäuse angeordnet ist. Dadurch kann im ersten Fall das bekannte Doppelventil entfallen. Außerdem kann durch die Integration des Unterdruckerzeugers in das Bremskraftverstärkergehäuse auf eine aufwendige Verlegung von Unterdruckschläuchen im Motorraum zwischen der Unterdruckpumpe und dem Unterdruckanschluss an dem Bremskraftverstärkergehäuse verzichtet werden.

Ein bevorzugtes Ausführungsbeispiel des Unterdruck-Bremskraftverstärkers ist dadurch gekennzeichnet, dass der Unterdruckerzeuger einen Lufteintritt, der in die Unterdruckkammer mündet, und einen Luftaustritt aufweist, der in die Arbeitskammer mündet. Über den Lufteintritt wird von dem Unterdruckerzeuger ein Arbeitsmedium, insbesondere Luft, aus der Unterdruckkammer abgesaugt. Das abgesaugte Arbeitsmedium gelangt durch den Unterdruckerzeuger über den Luftaustritt in die Arbeitskammer.

Ein weiteres bevorzugtes Ausführungsbeispiel des Unterdruck-Bremskraftverstärkers ist dadurch gekennzeichnet, dass der Unterdruckerzeuger in oder an der Arbeitskammer bzw. Unterdruckkammer angeordnet ist. Durch eine Verbindung der Saugseite mit dem Inneren des Bremskraftverstärkers ist eine Evakuierung der Unterdruckkammer bzw. Arbeitskammer gewährleistet.

Ein weiteres bevorzugtes Ausführungsbeispiel des Unterdruck-Bremskraftverstärkers ist dadurch gekennzeichnet, dass der Unterdruckerzeuger an dem Arbeitskolben befestigt ist. Vorzugsweise umfasst der Arbeitskolben ein mechanisch stabiles Trägerteil, das zum Beispiel aus Metallblech gebildet ist und an dem der Unterdruckerzeuger befestigt ist.

Ein weiteres bevorzugtes Ausführungsbeispiel des Unterdruck-Bremskraftverstärkers ist dadurch gekennzeichnet, dass der Unterdruckerzeuger eine elektrisch angetriebene Unterdruckpumpe umfasst. Der Antrieb der Unterdruckpumpe erfolgt vorzugsweise bedarfsabhängig, z.B. druckgesteuert, um den Energieverbrauch und die Abnutzung der Unterdruckpumpe gering zu halten.

Ein weiteres bevorzugtes Ausführungsbeispiel des Unterdruck-Bremskraftverstärkers ist dadurch gekennzeichnet, dass die elektrisch angetriebene Unterdruckpumpe in der Arbeitskammer oder Unterdruckkammer des Bremskraftverstärkergehäuses an dem Arbeitskolben befestigt ist. Vorzugsweise wird die elektrisch angetriebene Unterdruckpumpe über Stromkabel mit elektrischem Strom versorgt, die von der Unterdruckpumpe zum Bremskraftverstärkergehäuse geführt sind. Die Stromkabel sind vorzugsweise so ausgeführt und bemessen, dass die Bewegung des Arbeitskolbens im Betrieb der Unterdruckpumpe nicht beeinträchtigt wird.

Ein weiteres bevorzugtes Ausführungsbeispiel des Unterdruck-Bremskraftverstärkers ist dadurch gekennzeichnet, dass der Arbeitskolben mit einer Auslöseeinrichtung gekoppelt ist, die mit einem Bremspedal zusammenwirkt. Durch die Auslöseeinrichtung wird der Unterdruckerzeuger in Abhängigkeit von der Betätigung des Bremspedals bedarfabhängig ein-und/oder ausgeschaltet.

Ein weiteres bevorzugtes Ausführungsbeispiel des Unterdruck-Bremskraftverstärkers ist dadurch gekennzeichnet, dass die Auslöseeinrichtung einen Kontaktschalter oder ein Potentiometer umfasst, über den die elektrisch angetriebene Unterdruckpumpe eingeschaltet wird, wenn das Bremspedal betätigt wird. Dadurch wird es möglich, auf eine direkte Kopplung des Bremskraftverstärkers mit dem Bremspedal zu verzichten, so dass der Bremskraftverstärker an einem beliebigen Ort in einem Kraftfahrzeug untergebracht werden kann.

Ein weiteres bevorzugtes Ausführungsbeispiel des Unterdruck-Bremskraftverstärkers ist dadurch gekennzeichnet, dass der Arbeitskolben mit Hilfe einer Rollmembrane an dem Bremskraftverstärkergehäuse angebracht ist. Durch die Rollmembrane werden eine dichte Abtrennung zwischen der Arbeitskammer und der Unterdruckkammer sichergestellt, ohne die Bewegbarkeit des Arbeitskolbens in dem Bremskraftverstärkergehäuse zu beeinträchtigen.

Ein weiteres bevorzugtes Ausführungsbeispiel des Unterdruck-Bremskraftverstärkers ist dadurch gekennzeichnet, dass der Unterdruckerzeuger eine Flügelzellenpumpe umfasst. Alternativ kann der Unterdruckerzeuger auch eine Membranpumpe oder eine Kolbenpumpe umfassen. Auch der Einsatz anderer Verdrängerpumpen ist möglich.

Ein weiteres bevorzugtes Ausführungsbeispiel des Unterdruck-Bremskraftverstärkers ist dadurch gekennzeichnet, dass der Unterdruckerzeuger einen Lufteintritt, der in die Unterdruckkammer mündet, und einen zweiten Lufteintritt, der in die Arbeitskammer mündet, aufweist.

Ein weiteres bevorzugtes Ausführungsbeispiel des Unterdruck-Bremskraftverstärkers ist dadurch gekennzeichnet, dass der Lufteintritt bei Betätigen des Bremspedals verschlossen wird.

Ein weiteres bevorzugtes Ausführungsbeispiel des Unterdruck-Bremskraftverstärkers ist dadurch gekennzeichnet, dass der Unterdruckerzeuger außen am Bremskraftverstärkergehäuse auf der Seite der Unterdruckkammer angeordnet ist.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.

Figur 1 zeigt eine schematische Darstellung eines erfindungsgemäßen Unterdruck-Bremskraftverstärkers im Schnitt.

Figur 2 zeigt einen zweiten erfindungsgemäßen Bremskraftverstärker.

Die beiliegende Figur zeigt einen Bremskraftverstärker 1 im Schnitt durch ein Bremskraftverstärkergehäuse 4. Der Bremskraftverstärker 1 gehört zur Bremsanlage eines (nicht dargestellten) Kraftfahrzeugs. Der Bremskraftverstärker dient dazu, die Muskelkraft eines Fahrers des Kraftfahrzeugs beim Bremsen durch eine Hilfskraft zu unterstützen. In dem Bremskraftverstärkergehäuse 4 ist ein Arbeitskolben 6 in Richtung eines Doppelpfeils 7 hin und her bewegbar aufgenommen. Der Arbeitskolben 6 ist mit Hilfe einer Rollmembran 9 in bekannter Art und Weise hin und her bewegbar an dem Bremskraftverstärkergehäuse 4 befestigt. Durch den Arbeitskolben 6 mit der Rollmembran 9 wird der Innenraum des Bremskraftverstärkergehäuses in eine Arbeitskammer 11 und eine Unterdruckkammer 12 unterteilt.

Über eine Belüftungseinrichtung 14 kann Umgebungsluft in die Arbeitskammer 11 gelangen. Die Belüftungseinrichtung 14 kann ein Belüftungsventil umfassen. Durch ein Pluszeichen 15 in der Arbeitskammer 11 ist angedeutet, dass der Druck in der Arbeitskammer 11 bei einer Betätigung des Bremskraftverstärkers 1 größer als in der Unterdruckkammer 12 ist. Durch ein Minuszeichen 16 ist angedeutet, dass im Betrieb des Bremskraftverstärkers 1 in der Unterdruckkammer 12 Unterdruck herrscht.

In der Unterdruckkammer 12 ist zwischen dem Arbeitskolben 6 und dem Bremskraftverstärkergehäuse 4 eine Schraubendruckfeder 18 vorgespannt, die dazu dient, den Arbeitskolben 6 in eine Ruhestellung vorzuspannen. In seiner Ruhestellung ist der Arbeitskolben 6 soweit wie möglich zu dem Pluszeichen 15 hin verschoben. Der Arbeitskolben 6 ist auf seiner der Arbeitskammer 11 zugewandten Seite über ein Bremsgestänge 21 mit einem (nicht dargestellten) Bremspedal gekoppelt. Auf der anderen Seite ist der Arbeitskolben 6 über eine Schubstange 24 mit einem Hauptbremszylinder 26 gekoppelt.

In der Arbeitskammer 11 ist eine Unterdruckpumpe 30 an dem Arbeitskolben 6 befestigt. Bei der Unterdruckpumpe 30 handelt es sich um eine Verdrängerpumpe, wie zum Beispiel eine Flügelzellenpumpe, mit einem Eintrittsstutzen 31, der durch den Arbeitskolben 6 hindurch in die Unterdruckkammer 12 ragt. Der Eintrittstutzen 31 dient, wie durch einen Pfeil 32 angedeutet ist, dazu, Luft aus der Unterdruckkammer 12 anzusaugen. Die durch den Eintrittsstutzen 31 angesaugte Luft tritt aus einem Austrittsstutzen 35 der Unterdruckpumpe 30 aus, wie durch einen Pfeil 36 angedeutet ist. Der Austrittsstutzen 35 der Unterdruckpumpe 30 ist in der Arbeitskammer 11 angeordnet.

Die Unterdruckpumpe 30 wird durch einen Elektromotor 38 angetrieben, der in die Unterdruckpumpe 30 integriert ist. Der Elektromotor 38 wird über Stromversorgungskabel 41, 42 mit Strom versorgt. Die Stromversorgungskabel 41, 42 erstrecken sich von dem Elektromotor 38 zu Steckverbindungselementen 43, 44, die mit Plus und Minus bezeichnet und in einem Steckergehäuse 46 aufgenommen sind, das wiederum an dem Bremskraftverstärkergehäuse 4 befestigt ist.

Beim Betätigen des (nicht dargestellten) Bremspedals wird die Unterdruckpumpe 30 eingeschaltet, so dass Luft aus der Unterdruckkammer 12 in die Arbeitskammer 11 gefördert wird, wie durch die Pfeile 32, 36 angedeutet ist. Durch den Einbau der Unterdruckpumpe 30 in das Bremskraftverstärkergehäuse 4 kann auf die Verlegung von Schläuchen und einen besonderen Bedarf für einen Anbauort der Pumpe verzichtet werden. Die Betätigung der Unterdruckpumpe 30 kann rein elektrisch durch einen Kontaktschalter oder Potentiometer am Bremspedal ausgelöst werden. Damit besteht die Möglichkeit, auf eine direkte Betätigung des Hauptbremszylinders 26 durch die mechanische Ankopplung des Bremspedals zu verzichten. Dadurch kann der Bremskraftverstärker an beliebigen Anbauorten angebaut werden.

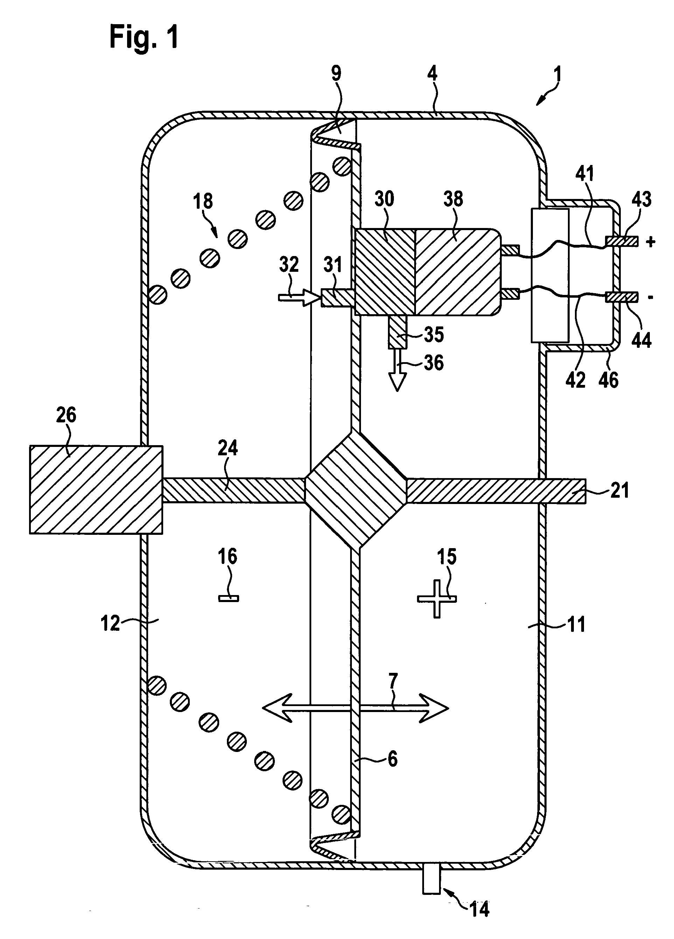

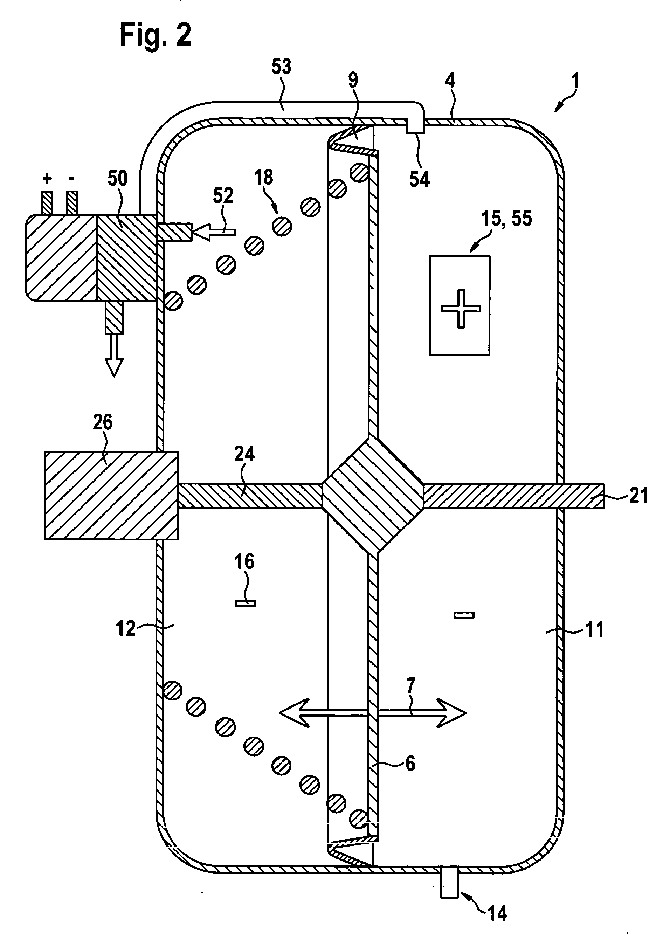

In Figur 2 ist ein zweiter erfindungsgemäßer Unterdruck-Bremskraftverstärker im Schnitt dargestellt. Gleiche Elemente wie in Figur 1 sind mit gleichen Bezugszeichen versehen und sollen zur Vermeidung von Wederholungen hier nicht mehr erläutert werden. Der Unterschied zur der in Figur 1 dargestellten Bremskraftverstärker besteht darin, dass eine ebenfalls elektrisch betätigte Unterdruckpumpe 50 außen am Bremskraftverstärkergehäuse 1 angeordnet ist. Die Pumpe weist einen Lufteintritt 52 auf, durch welchen die Unterdruckkammer 12 evakuiert werden kann und über eine Leitung 53 einen zweiten Lufteintritt 54, über welchen die Arbeitskammer 11 evakuiert werden kann. Somit werden also beide Kammern 11 und 12 von der E-lektropumpe 50 evakuiert. Bei Betätigung der Bremspedals wird dann die Verbindung zur Arbeitskammer 11 vom der Pumpe 50 abgetrennt, beispielsweise durch einige nicht dargestellte Ventileinrichtung, die an der Leitung 53 wirksam wird, und gleichzeitig über ein nicht dargestelltes Ventil 55 die Arbeitskammer 11 belüftet, was wegproportional zur Bremsstangenverschiebung der Bremsstange 21 geschieht.

### Bezugszeichenliste

- 1.: Bremskraftverstärker
- 4.: Bremskraftverstärkergehäuse
- 6.: Arbeitskolben
- 7.: Doppelpfeil
- 9.: Rollmembran
- 11.: Arbeitskammer
- 12.: Unterdruckkammer
- 14.: Belüftungsventil
- 15.: Pluszeichen
- 16.: Minuszeichen
- 18.: Schraubendruckfeder
- 21.: Bremsgestänge
- 24.: Schubstange
- 26.: Hauptbremszylinder
- 30.: Unterdruckpumpe

- 31.: Eintrittsstutzen
- 32.: Pfeil
- 35.: Austrittsstutzen
- 36.: Pfeil
- 38.: Elektromotor
- 41.: Stromversorgungskabel
- 42.: Stromversorgungskabel
- 43.: Steckverbindungselement
- 44.: Steckverbindungselement
- 46.: Steckergehäuse
- 50.: Unterdruckpumpe
- 52.: Lufteintritt
- 53.: Leitung
- 54.: Lufteintritt
- 55.: Ventil

## Patentansprüche

1. Unterdruck-Bremskraftverstärker mit einem Bremskraftverstärkergehäuse (4), das durch einen Arbeitskolben (6) in eine Unterdruckkammer (12) und eine Arbeitskammer (11) unterteilt ist, **dadurch gekennzeichnet, dass** ein Unterdruckerzeuger (30, 50), insbesondere eine Unterdruckpumpe, in das Bremskraftverstärkergehäuse (4) integriert ist oder am Bremskraftverstärkergehäuse (4) angeordnet ist.

2. Unterdruck-Bremskraftverstärker nach Anspruch 1, **dadurch gekennzeichnet, dass** der Unterdruckerzeuger (30) einen Lufteintritt (31), der in die Unterdruckkammer (12) mündet, und einen Luftaustritt (35) aufweist, der in die Arbeitskammer (11) mündet.

3. Unterdruck-Bremskraftverstärker nach einem der vorhergehenden Ansprüche, **dadurch gekennzeichnet, dass** der Unterdruckerzeuger (30) in der Arbeitskammer (11) angeordnet ist.

4. Unterdruck-Bremskraftverstärker nach einem der vorhergehenden Ansprüche, **dadurch gekennzeichnet, dass** der Unterdruckerzeuger (30) an dem Arbeitskolben (6) befestigt ist.

5. Unterdruck-Bremskraftverstärker nach einem der vorhergehenden Ansprüche, **dadurch gekennzeichnet, dass** der Unterdruckerzeuger (30, 50) eine elektrisch angetriebene Unterdruckpumpe umfasst.

6. Unterdruck-Bremskraftverstärker nach Anspruch 5, **dadurch gekennzeichnet, dass** die elektrisch angetriebene Unterdruckpumpe (30) in der Arbeitskammer (11) oder in der Unterdruckkammer (12) des Bremskraftverstärkergehäuses (4) an dem Arbeitskolben (6) befestigt ist.

7. Unterdruck-Bremskraftverstärker nach einem der vorhergehenden Ansprüche, **dadurch gekennzeichnet, dass** der Arbeitskolben (6) mit einer Auslöseeinrichtung gekoppelt ist, die mit einem Bremspedal zusammenwirkt.

8. Unterdruck-Bremskraftverstärker nach Anspruch 7, **dadurch gekennzeichnet, dass** die Auslöseeinrichtung einen Kontaktschalter oder ein Potentiometer umfasst, über den die elektrisch angetriebene Unterdruckpumpe (30) eingeschaltet wird, wenn das Bremspedal betätigt wird.

9. Unterdruck-Bremskraftverstärker nach einem der vorhergehenden Ansprüche, **dadurch gekennzeichnet, dass** der Arbeitskolben (6) mit Hilfe einer Rollmembran (9) an dem Bremskraftverstärkergehäuse (4) angebracht ist.

10. Unterdruck-Bremskraftverstärker nach einem der vorhergehenden Ansprüche, **dadurch gekennzeichnet, dass** der Unterdruckerzeuger (30) eine Flügelzellenpumpe umfasst.

11. Unterdruckbremskraftverstärker nach Anspruch 1, Anspruch 5, oder Anspruch 7 bis 10, **dadurch gekennzeichnet, dass** der Unterdruckerzeuger (50) einen Lufteintritt (52), der in die Unterdruckkammer (12) mündet, und einen zweiten Lufteintritt (54), der in die Arbeitskammer (11) mündet, aufweist.

12. Unterdruckbremskraftverstärker nach Anspruch 11, **dadurch gekennzeichnet, dass** der Lufteintritt (54) bei betätigen des Bremspedals verschlossen wird.

13. Unterdruckpumpe nach Anspruch 10, Anspruch 11 oder Anspruch 12, **dadurch gekennzeichnet, dass** der Unterdruckerzeuger (50) außen am Bremskraftverstärkergehäuse (1) auf der Seite der Unterdruckkammer (12) angeordnet ist.
